Europäisches Patentamt

European Patent Office

Office européen des brevets

(19)

(11) Veröffentlichungsnummer: **0 240 660**
**B1**

(12) **EUROPÄISCHE PATENTSCHRIFT**

(45) Veröffentlichungstag der Patentschrift:
31.01.90

(51) Int. Cl.⁴: **F16K 15/20**

(21) Anmeldenummer: **87101445.2**

(22) Anmeldetag: **03.02.87**

(54) **Ventil für Luftreifen od.dgl. und Aufsatz dafür.**

(30) Priorität: **03.02.86 DE 8602739 U**

(43) Veröffentlichungstag der Anmeldung:
**14.10.87 Patentblatt 87/42**

(45) Bekanntmachung des Hinweises auf die Patenterteilung:
**31.01.90 Patentblatt 90/5**

(84) Benannte Vertragsstaaten:
**AT BE CH DE ES FR GB IT LI LU NL SE**

(56) Entgegenhaltungen:
**AT-B- 350 922**
**DE-A- 2 145 997**
**DE-A- 2 810 513**
**DE-B- 2 458 729**
**DE-U- 8 210 200**
**US-A- 1 732 918**
**US-A- 1 934 571**
**US-A- 4 054 152**
**US-E- 29 116**

(73) Patentinhaber: **Alligator Ventilfabrik GmbH,**
**Alleenstrasse 1, D-7928 Giengen/Brenz(DE)**

(72) Erfinder: **Probst, Georg, Dipl.-Ing., Memel-Strasse 54,**
**D-7340 Geislingen(DE)**

(74) Vertreter: **Hiebsch, Gerhard F., Dipl.-Ing., Hiebsch &**
**Peege Patentanwälte**
**Postfach 464 Erzbergerstrasse 5a, D-7700 Singen 1(DE)**

**Beschreibung**

Die Erfindung betrifft ein Ventil für Luftreifen od. dgl. Lufträume, insbesondere für Fahrradschläuche, entsprechend dem Oberbegriff von Anspruch 1. Zudem erfaßt die Erfindung einen Aufsatz für Ventile entsprechend dem Oberbegriff von Anspruch 6.

Derartige auf dem Markt befindliche Ventile sind aus der Schrift zum DE-U 8 210 200 bekannt und werden mit einem freien Ende des Ventilgehäuses in eine dafür vorgesehene Öffnung des Luftschlauches eingesetzt sowie an diesem festgelegt. Der Ventilkörper selbst ist von oben her in das Ventilgehäuse eingeführt und bevorzugt durch eine Überwurfmutter gehalten, welche eine radial abkragende Ringrippe des Ventilkörpers übergreift. Aus dem von jener Überwurfmutter begrenzten Ventilgehäuse ragt dann ein zylindrischer Teil des Ventilkörpers mit Außengewinde heraus, auf welches zum Schutz der Ventilmündung eine Ventilkappe aufgeschraubt wird. Der Abstand der sog. Sitzfläche von der Ringkante der Ventilmündung ist verhältnismäßig groß; sie sitzt bevorzugt nahe dem im Ventilgehäuse befindlichen Ende des Ventilkörpers. Das Schließelement wird durch den im angeschlossenen Luftschlauch herrschenden Druck in seiner Schließstellung gehalten und greift dabei mit einem Bolzen in den mündungswärtigen Abschnitt der Kammer ein. Wird ein Druckluftschlauch mit der Mündung des Ventilkörpers verbunden, drückt der dadurch erzeugte Überdruck das Dichtelement zum Boden des Ventilkörpers und gibt den Querschnitt der Sitzfläche so weit frei, daß Luft über seitliche oder axiale Durchbrüche des Ventilkörpers in den von einem Innenraum des Ventilgehäuses und dem Luftschlauch gebildeten Luftraum eintritt; dieser Luftraum ist gegenüber der Atmosphäre durch den Ventilkörper umgebende elastische Dichtungsringe abgedichtet.

Angesichts dieser Gegebenheiten hat sich der Erfinder das Ziel gesetzt, ein Ventil der eingangs beschriebenen Art so weiter zu bilden, daß es leichter und kostengünstiger herstellbar ist sowie die Einleitung der Luft und das Messen von Drücken erleichtert. Darüber hinaus soll das erfindungsgemäße Ventil die Überwachung des Druckes ermöglichen und einen Überdruck abbauen helfen.

Zur Lösung dieser Aufgabe dienen die Merkmale des Anspruchs 1.

Nach einem weiteren Merkmal der Erfindung verläuft zwischen Ventilmündung und Sitzfläche eine innere Ringwand, deren Durchmesser etwa dem halben Mündungsdurchmesser entspricht. Diese Ringwand ist also die Innenfläche einer zur Ventilachse hin ragenden Innenrippe, die einerseits eine zur Ventilmündung hin gerichtete, flach geneigte Fläche aufweist sowie anderseits die steil geneigte Sitzfläche; der Winkel der geneigten mündungsnahen Fläche ist größer als der Neigungswinkel der Sitzfläche, welch letztere etwa 20 bis 28° – bevorzugt 25° – bemißt.

Dank der vorstehend geschilderten Maßgaben ist es nunmehr auch möglich, auf die Ventilmündung einen davon lösbaren Aufsatz aufzubringen, der einen zur Sitzfläche reichenden Stift enthält, dessen Durchmesser geringer ist als der Durchmesser, den die Ringwand bestimmt. Der Aufsatz – für den hier selbständig Schutz beansprucht wird – drückt mit seinem Stift das Schließelement von seinem Sitz weg und öffnet damit den Durchgang für die Luftzufuhr.

Ein solcher Aufsatz ist aus der US-Re 29 116 bekannt und stellt ein kombiniertes Gerät zum Druckmessen und Aufblasen eines Luftreifens dar, das auf dem Ventilhals des Luftreifens festlegbar ist. In der sogenannten inaktiven Stellung kann Luft mittels eines Luftzuführungsaufsatzes zugeführt werden. Soll der Luftreifen aufgeblasen werden, so wird der Aufsatz so auf das obere Ende des Gerätes aufgesetzt, daß ein Betätigungskegel des Aufsatzes das obere Ende einer Kolbenstange des Ventildurchlasses ergreift, womit Druckluft vom Aufsatz her dem Luftreifen zugeführt wird. Dabei ist eine zusätzliche Führung, bestehend aus Schrägführungsnuten und Kugel erforderlich.

Soll nach dieser US-PS Re 29 116 der Luftdruck im Reifen nachgeprüft werden, so wird – ohne Aufsatz – der obere Teil des Gerätes durch Verdrehen nach unten bewegt. Besagte Schrägführungsnuten mit Kugeln dienen dabei als Führung. Ein Dichtring am zweiteiligen Kolben schiebt sich in den Ventildurchlaß, dichtet ihn ab, und die Kolbenstange ragt um ein gewisses Maß aus der Oberseite des Gerätes vor, wobei dieses Maß dem Druck im Luftreifen entspricht. Zum genauen Messen des Luftdruckes im Reifen hat die Kolbenstange auf ihrem vorspringenden Ende eine geeichte Skala. Dieser bekannte Aufsatz dient also nur zum Aufblasen des Luftreifens.

Mit den Merkmalen des Anspruchs 6 kann nunmehr problemlos zusammen mit dem Aufsatz der im System herrschende Luftdruck gemessen werden bei gleichzeitigem Anschluß an jene Luftzuführung, was ein Füllen und Messen des Systems und/oder ein alternatives Ablassen des Druckes über ein Überdruckventil gestattet.

Das Schließelement wird – wie gesagt – durch den Stift des Aufsatzes von seiner Sitzfläche weggedrückt und kann zu seiner Stabilisierung in dieser Freistellung durch radial abstehende Rippen od. dgl. unterstützt sein, die sich an die Innenwandung der Kammer anschmiegen, ohne den Luftdurchtritt zu behindern.

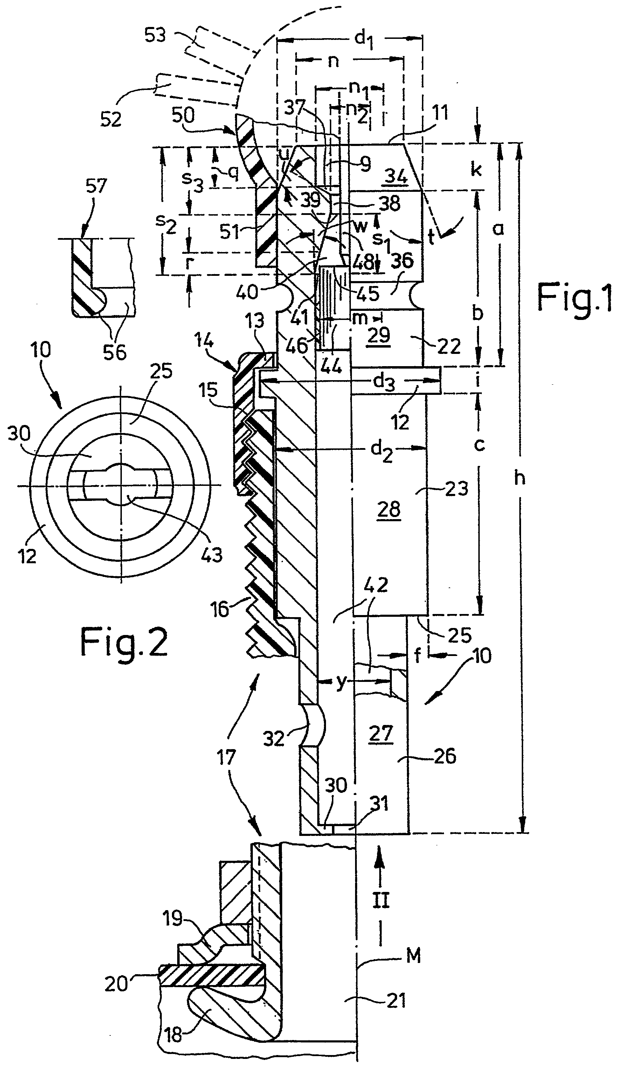

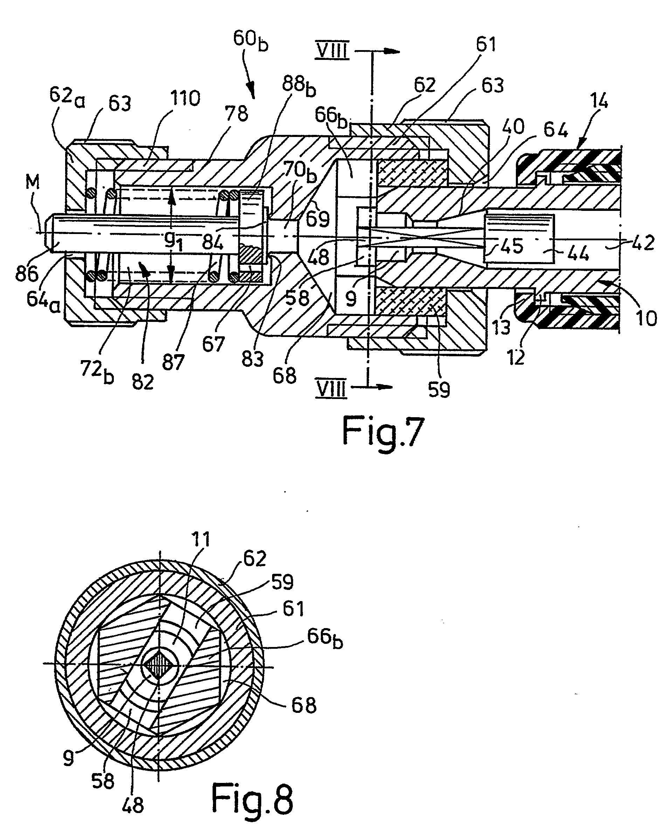

Weitere Vorteile, Merkmale und Einzelheiten der Erfindung ergeben sich aus der nachfolgenden Beschreibung bevorzugter Ausführungsbeispiele sowie anhand der Zeichnung; diese zeigt -- mit Ausnahme der Fig. 2, 8 -- jeweils im Längsschnitt in

Fig. 1 eine teilweise geschnittene Seitenansicht eines Ventils mit an dessen Ventilkörper festgelegtem Aufsatz zur Drucküberwachung;

Fig. 2 eine Stirnansicht zu Fig. 1 in deren Pfeilrichtung II;

Fig. 3 einen Teil des Ventilkörpers mit einem einen seitlichen Stutzen aufweisenden Aufsatz;

Fig. 4 bis Fig. 6 drei unterschiedliche Varianten des seitlichen Stutzens im Aufsatz der Fig. 3;

Fig. 7 eine andere Ausführung des Aufsatzes.

Fig. 8 den Querschnitt durch Fig. 7 nach deren Linie VIII - VIII.

Ein Ventilkörper 10 aus Metall oder Kunststoff einer Gesamtlänge h von etwa 25 mm weist in einem Abstand a (etwa 8 mm) von einer -- eine axiale Ausnehmung 9 umgebenden -- Ringkante 11 eine Ringrippe 12 auf, deren Höhe i etwa 1 mm mißt und die als Anschlag für einen Kragenrand 13 einer Ueberwurfmutter 14 dient; letztere ist mit einem Innengewinde 15 ausgestattet, das auf ein Außengewinde 16 eines bei 17 lediglich angedeuteten zylindrischen Ventilgehäuses aufgeschraubt ist. Aus dessen freiem Gehäuseende ist bei einer metallischen Ausführung ein Klemmflansch 18 nach auswärts herausgeformt, der bei Einsatz des Ventilgehäuses 17 in einen Luftschlauch 20 -- eines Fahrzeugreifens od.dgl. -- an dessen Schlauchinnenseite anliegt und dem dann ein Außenflansch 19 gegenübersteht. Statt jenes Klemmflansches 18 kann bei einem nicht dargestellten Beispiel auch ein Kunststoffoder Gummifuß vorgesehen sein.

Beidseits jener Ringrippe 12 des Ventilkörpers 10 erstrecken sich zylindrische Ventilkörperabschnitte 22, 23; der in Fig. 1 obenliegende Kopfabschnitt 22 -- eines Durchmessers $d_1$ von im gewählten Ausführungsbeispiel 5, 18 mm -- besitzt eine Länge b von etwa 6 mm und der untere Abschnitt 23 eine Länge c, welche etwa jenem Abstand a der Ringrippe 12 von der Ringkante 11 entspricht, sowie einen äußeren Durchmesser $d_2$ von 5,4 mm. Der mit $d_3$ bezeichnete Durchmesser der Ringrippe 12 ist etwa 1 mm größer als jener äußere Durchmesser $d_2$ der Außenfläche 28 des unteren Abschnittes 23. Dieser endet an einer ringförmigen Schulterfläche 25, welche einen rohrförmigen Fußansatz 26 des Ventilkörpers 10 umgibt. Die Außenfläche 27 des Fußansatzes 26 verläuft zur Außenfläche 28 des benachbarten Abschnittes 23 in einem radialen Abstand f von etwa 1,55 mm.

Der rohrförmige Fußansatz 26 ist sowohl in seinem Boden 30 als auch seitlich mit einem Durchbruch 31 bzw. 32 versehen.

Der beschriebene Kopfabschnitt 22 bzw. dessen Außenfläche 29 geht in eine sich zum Außendurchmesser n von 3,9 mm der Ringkante 11 mit einem Winkel t von 20° verjüngende Konusfläche 34 einer Länge k von 1,8 mm über. Diese Ringkante 11 umgibt eine Ventilmündung, nämlich jene axiale Ausnehmung 9 einer Länge q von 1,5 mm und des Mündungsdurchmessers $n_1$ von 1,25 mm. Die Ventilmündung 9 endet an einer von der Ringkante 11 weg in einem Winkel u (32°) geneigten Innenringfläche 37, an die eine schmale (etwa 0,5.q) achsparallele Ringwand 38 anschließt, welche einen Durchmesser $n_2$ von 1,7 mm begrenzt und an eine in einem Winkel w von 15° auswärts geneigte kegelförmige Sitzfläche 40 der axialen Länge $s_1$ von etwa 2,2 mm anschließt. Der untere Rand 41 der Sitzfläche 40 verläuft in einem aixalen Abstand $s_2$ zur Ringkante 11 von weniger als 5 mm, der obere Rand 39 der Sitzfläche 40 in einem axialen Abstand $s_3$, der etwa dem Mündungsdurchmesser $n_1$ entspricht.

Vom unteren Rand 41 der konischen Sitzfläche 40 bis zum Boden 30 des Fußansatzes 26 erstreckt sich eine zylindrische Innenkammer 42 mit gleichbleibendem Durchmesser y von etwa 3 mm. Ein mit 44 bezeichnetes axial bewegbares Schließelement -- bevorzugt ein Gummibolzen eines Durchmessers m von etwa 2,5 mm -- wird in Fig. 1 durch einen Stift 48 in Abstand zur Sitzfläche 40 gehalten; die obere Kante 45 des Schließelementes 44 dient in Abdichtstellung als Schließkante die dann in einem axialen Abstand r von 1 mm zum unteren Rand 41 der Sitzfläche 40 dieser rundum anliegt.

Der Stift 48 ist in der Mittelachse M eines bei 50 angedeuteten Aufsatzes angebracht, der hier teilkugelartig ausgebildet und mit einem Manschettenkragen 51 ausgestattet ist; letzterer schmiegt sich der Außenfläche 29 des Kopfabschnittes 22 an, wenn der Aufsatz 50 als Druckprüfer oder -wächter an den Ventilkörper 10 angefügt ist. Im Aufsatz 50 endet ein Anschlußschlauch 52 für ein nicht wiedergegebenes Druckmeßgerät sowie ein Zuführschlauch 53 für Luft.

Steht das Schließelement 44 gemäß Fig. 1 unterhalb der Sitzfläche 40 zu dieser in Abstand, kann durch den Zuführschlauch 53 eingeleitete Luft ohne weiteres in die Innenkammer 42 des Ventilkörpers 10 und durch dessen Durchbrüche 31, 32 in einen Gehäuseraum 21 gelangen, der den Ventilkörper 10 -- ohne Zwischenschaltung elastischer Dichtungen zwischen diesem und dem Ventilgehäuse 17 -- dicht umgibt. Der Gehäuseraum 21 ist seinerseits an den Luftschlauch 20 des Fahrzeugreifens od.dgl. angeschlossen.

Bei Wegnahme jenes Aufsatzes 50 mit seinem axialen Stift 48 führt der Innendruck des Luftraumes 21/42 das Schließelement 44 an die Sitzfläche 40 zurück und drückt es an letztere an. Zur Stabilisierung des an sich zylindrischen Schließelementes 44, dessen Durchmesser m geringer ist als jener (y) der Innenkammer 42, können an das Schließelement 44 Radialrippen 46 angeformt sein. Unterhalb des Manschettenkragens 51 ist in Fig. 1 eine Ringnut 36 im Kopfabschnitt 22 zu erkennen, in welche nach Abnahme des Aufsatzes 50 ein Innenwulst 56 einer aus Gründen der Uebersichtlichkeit nur teilweise wiedergegebenen, die Ventilmündung 9 schützenden Klemmkappe 57 eingreift.

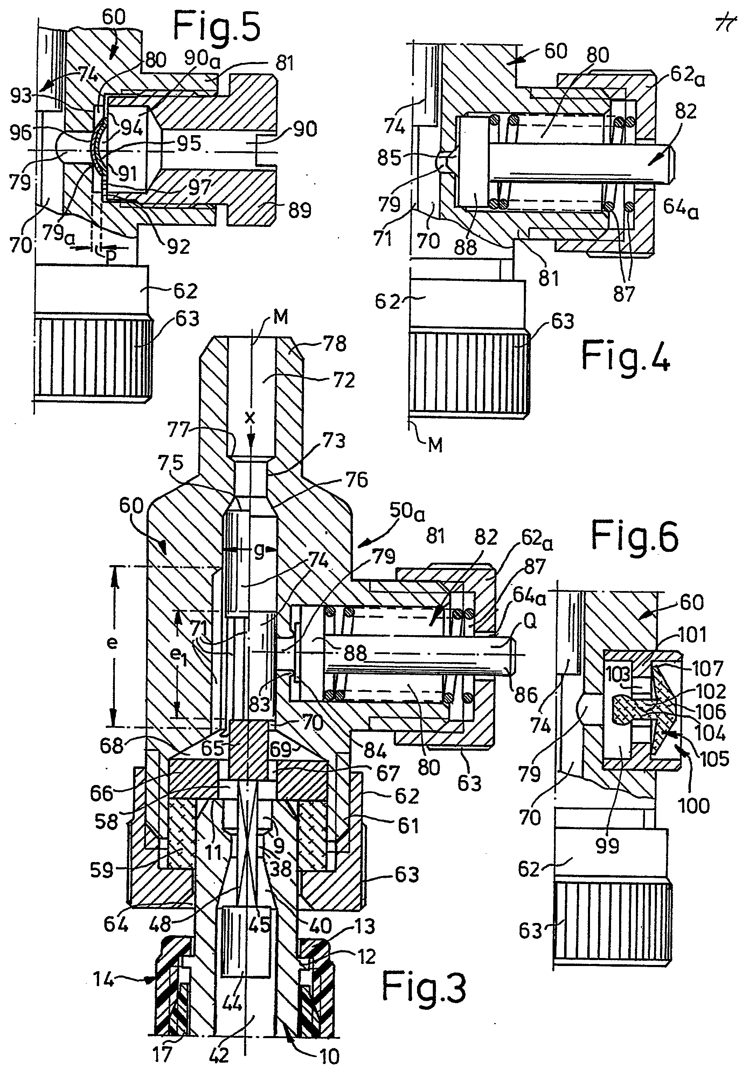

Der Aufsatz $50_a$ der Fig. 3 ist als Drucküberwachungseinrichtung mittels eines Dichtringes 59 an den Ventilkörper 10 angeschlossen. Jener Dichtring 59 umfängt dichtend die Außenfläche 29 des Ventil-Kopfabschnittes 22 und lagert in einem zylindrischen Kragen 61 eines Gehäusekörpers 60, an dem eine Schraubbüchse 62 mit gerändelter Grifffläche 63 sowie zentrischem Durchbruch 64 festliegt.

Den Durchbruch 64 durchsetzt in Fig. 3 der Ventilkörper 10, dessen Ringkante 11 einem den -- hier als Vierkant ausgebildeten -- axialen Stift 48 tragenden Anschlagstück 66 anliegt. Dieser ist scheibenartig geformt sowie mit Luftdurchlässen 67 oberhalb einer nutartigen Einformung 58 versehen, er ruht fest auf dem Dichtring 59 in einem Aufnahmeraum 68 des Gehäusekörpers 60. Der Aufnahmeraum 68 verjüngt sich mit einer konischen Dachfläche 69 zu einer Axialbohrung 70 des Gehäusekörpers 60, in welche ein Anschlagbolzen 65 des Anschlagstückes 66 einragt.

Mit 71 sind Längsnuten in der Wandung der Axialbohrung 70 bezeichnet, deren Durchmesser g etwa 2,8 mm mißt. Die Nutenlänge e ist größer gewählt als die Länge $e_1$ (hier etwa 5,5 mm) eines zylindrischen Dichtkörpers 74, der mit Spiel in der Axialbohrung 70 lagert und -- wie Schließelement 44 -- ein Gummizylinder sein kann.

Fig. 3 zeigt links von der Mittelchachse M die Schließstellung des Dichtkörpers 74, dessen Dichtkante 75 dann sich zur Bohrungsmündung 72 hin verjüngenden Konusfläche 76 am freien Ende der Axialbohrung 70 anliegt; diese Konusfläche 76 ist Teil einer -- den Querschnitt der Bohrungsmündung 72 verengenden -- Radialrippe 73 des Gehäusekörpers 60 mit flach geneigter Außenfläche 77.

In dieser Schließstellung des Dichtkörpers 74 ist die Axialbohrung 70 von der Bohrungsmündung 72 eines Anschlußzylinders 78 -- etwa für eine Luftzuführleitung -- getrennt. In der rechts von der Mittelachse M skizzierten Oeffnungsstellung des Dichtkörpers 74 bleibt die Axialbohrung 70 dank der radial herausgeformten Längsnuten 71 an den Aufnahmeraum 68 angeschlossen.

In Schließstellung des Dichtkörpers 74 ist der Querschnitt einer Radialbohrung 79 des Gehäusekörpers 60 freigegeben, die in einen Stutzenraum 80 eines an den Gehäusekörper 60 angeformten Seitenstutzens 81 für ein einstellbares Ueberdruckventil 82 mündet. Einem wulstartigen Dichtungsrand 83 ist eine Dichtscheibe 84 zugeordnet, die mit einem Hubbolzen 86 in Richtung von dessen Achse Q bewegt werden kann und zwar durch bzw. gegen die Kraft einer Schraubenfeder 87, die sich einerseits gegen eine mehrkantige Fußplatte 88 des Hubbolzens 86 und anderseits gegen eine einstellbare Schraubbüchse $62_a$ des Seitenstutzens 81 abstützt. Der Hubbolzen 86 durchsetzt einen zentrischen Durchbruch $64_a$ der Schraubbüchse $62_a$ mit weitem Spiel.

Wird durch die Bohrungsmündung 72 der -- dank des Stiftes 48 offenen -- Innenkammer 42 des Ventilkörpers 10 Druckluft in Strömungsrichtung x zugeführt, schiebt sich der Dichtkörper 74 vor die dann dicht abgedeckte Radialbohrung 79. Im Augenblick der Unterbrechung des Luftstromes gleitet der Dichtkörper 74 zu seinem Sitz, der Konusfläche 76, zurück und gibt die Radialbohrung 79 frei. Nun kann in Abhängigkeit der Einstellung der Schraubenfeder 87 -- etwa durch Auswahl der Federkennlinie und/oder durch Verstellen der Schraubbüchse $62_a$ - bei unerwünschten Ueberdruckspitzen Luft zur Seite hin abgenommen werden; zu hoher Innendruck im System drückt die Dichtscheibe 84 vom Dichtungsrand 83 ab, bis die überschüssige Menge an Innenluft an der Fußplatte 88 seitlich vorbei in den Stutzenraum 80 und durch den Ringspalt bei $64_a$ abgeströmt ist. Zwischen der mehrkantigen Fußplatte 88 und der Innenwand des zylindrischen Sutzenraumes 80 sind für den Luftstrom Spaltsegmente vorhanden, wie sie beispielhaft zu einem anderen Teil in Fig. 8 angedeutet sind.

Bei der Ausführung nach Fig. 4 ist -- statt des die Radialbohrung 79 auf der Stutzenseite umgebenden wulstartigen Dichtungsrandes 83 -- an der Fußplatte 88 eine Dichtspitze 85 vorgesehen, die -- wie auch die zuvor beschriebene Dichtscheibe 84 -- aus elastischem Werkstoff sein kann und sich an die angefaste Kante 79 $_a$der Radialbohrung 79 anschmiegt.

Eine vereinfachte Ausführung des Ueberdruckventils 82 verdeutlicht Fig. 5. Der Seitenstutzen 81 nimmt einen Schraubeinsatz 89 mit axialer Bohrung 90 auf. Die im Seitenstutzen 81 angeordnete Stirn 91 des Schraubeinsatzes 89 preßt eine Schließplatte 94 gegen eine Schulterfläche 92 des Seitenstutzens 81. Diese Schließplatte 94 lagert so in einem Abstand p von etwa 0,5 mm zur Bodenfläche 93 des Stutzenraumes 80, daß eine kalottenartige Ausformung 95 aus begrenzt elastischem Werkstoff mit Dämpfauflage 96 den Rand $79_a$ der Radialbohrung 79 berührt und diese verschließt. In Abhängigkeit von der gewählten Elastizität wird bei Innendruck bestimmter Höhe die kalottenartige Ausformung vom Rand $79_a$ abgehoben - Luft strömt durch Ausnehmungen 97 der Schließplatte 94 in einen Fußraum $90_a$ der Bohrung 90 und durch diese nach außen.

Von besonders einfacher Konstruktion ist die Ausführung nach Fig. 6 mit in eine seitliche Sackausnehmung 99 des zylindrischen Gehäusekörpers 60 eingesetztem Formstück 100 H-förmigen Querschnittes. Dessen Mittelplatte 101 weist koaxial zur Radialbohrung 79 ein Aufnahmeloch 102 für den Stiel 104 eines pilzartigen Schließeinsatzes 105 aus Kunststoff mit kuppelartig gewölbter Kopfscheibe 106 auf. Auch hier ermöglicht die Wahl der Werkstoffelastizität der Kopfscheibe 106 eine Kontrolle des Innendruckes; steigt dieser an, hebt er den über Strömungsdurchbrüchen 103 liegenden Randbereich 107 der Kopfscheibe 106 von der Mittelplatte 101 kurzzeitig ab.

Auf dem Ventilkörper 10 der Fig. 7 sitzt ein Gehäusekörper $60_b$ ohne Dichtkörper. Im Aufnahmeraum 68 ist hier als Anschlagstück eine Sechskantscheibe $66_b$ festgelegt, in deren Unterseite eine nutähnliche Einformung 58 diametral verläuft. Wie vor allem Fig. 8 erkennen läßt, finden sich zwischen den Kanten der Sechskantscheibe $66_b$ und der Innenfläche des Aufnahmeraums 68 segmentförmige Luftdurchlässe.

Die jenen Aufnahmeraum 68 fortsetzende kurze Axialbohrung $70_b$ mündet hier in einen zylindrischen Mündungsraum $72_b$ eines Durchmessers $g_1$ von 5 mm im Anschlußzylinder 78.

Die kurze Axialbohrung $70_b$ ist von einem Wulstrand $83_b$ umgeben. Auf den Anschlußzylinder 78 ist bei 110 eine Schraubbüchse $62_a$ aufgeschraubt. Der so entstehende Aufnahmeraum enthält die in Fig. 3 und zu dem dort gezeigten Ueberdruckventil 82 beschriebenen Einzelteile 84 und 86 bis 88. Das Ueberdruckventil 82 ist hier also koaxial zum Ventilkörper 10 angeordnet; unerwünschter Ueberdruck hebt die Dichtscheibe 84 an und erlaubt überschüssiger Luft, durch den Mündungsraum $72_b$ zu entweichen. Um dem Ventilkörper 10 Luft zuzuführen, muß bei dieser Ausführung der Aufsatz abgenommen werden.

Nicht dargestellt sind Ausführungsformen, bei denen statt des zu Fig. 7 beschriebenen Ueberdruckventils im Anschlußzylinder 78 koaxial zum Ventilkörper 10 Ausgestaltungen gemäß Fig. 4 bis 6 angebracht sind.

## Patentansprüche

1. Ventil für Luftreifen od. dgl. Lufträume, insbesondere für Fahrradschläuche (20), mit in ein Ventilgehäuse (17) eingesetztem Ventilkörper (10), der rohrartig ausgebildet und mit einer seine Ventilmündung (9) umgebenden Ringkante (11) versehen ist, an die eine axiale Kammer für ein darin axial beweg-bares Schließelement (44) anschließt, welches in seiner Schließstellung an einer als Sitz dienenden, einen Neigungswinkel (w) bestimmenden, kegelmantelartigen Fläche (40) der sich zur Ringkante (11) hin verjüngenden Kammer anliegt, wobei vom Ventilkörper (10) radial eine Ringrippe (12) als Anschlag für Teile (14) des Ventilgehäuses (17) abragt, dadurch gekennzeichnet, daß der Abstand ($s_3$) der mündungsnahen Kante (39) Sitzfläche (40) von der Ringkante (11) der Ventilmündung (9) etwa zwischen dem 0,5- und dem 2,5-fachen des Mündungsdurchmessers ($n_i$) beträgt, bevorzugt letzterem entspricht, und daß die Sitzfläche (40) zwischen Ringkante (11) und Ringrippe (12), bevorzugt in der Mitte von deren axialem Abstand (a), angeordnet ist.

2. Ventil nach Anspruch 1, dadurch gekennzeichnet, daß zwischen Ventilmündung (9) und Sitzfläche (40) eine innere Ringwand (38) verläuft, deren Durchmesser ($n_2$) etwa dem halben Mündungsdurchmesser ($n_i$) entspricht, wobei gegebenenfalls zwischen Ventilmündung (9) und Ringwand (38) eine zu dieser in einem Winkel (u) geneigten Fläche (37) angeordnet ist, und/oder daß der Winkel (u) der geneigten Fläche (37) größer ist als der Neigungswinkel (w) der Sitzfläche (40), der etwa 20 bis 28°, bevorzugt 25°, beträgt.

3. Ventil nach Anspruch 1 oder 2, dadurch gekennzeichnet, daß das Schließelement (44) zylindrisch ausgebildet und zumindest in seinem sitzfernen Bereich mit radial abkragenden Ausformungen (46) versehen ist, welche der Wandung der Kammer (42) etwa anliegen.

4. Ventil nach einem der Ansprüche 1 bis 3, dadurch gekennzeichnet, daß in die mündungsnahe Außenfläche (29) des Ventilkörpers (10) wenigstens eine Ringnut (36) zur Aufnahme einer entsprechenden Ausformung (56) eines Aufsatzes (50, 50$_a$; 57) eingeformt ist.

5. Ventil nach einem der Ansprüche 1 bis 4, gekennzeichnet durch einen die Ventilmündung (9) umfangenden, lösbar am Ventilkörper (10) festliegend angebrachten Aufsatz (50, 50$_a$), der einen zur Sitzfläche (40) reichenden Stift (48) enthält, zwischen dem und der Ringwand (38) ein Strömungsspalt vorhanden ist, wobei der Stift etwa bis zum inneren Rand (41) der Sitzfläche (40) ragt und das Schließelement (44) zu dieser in Abstand hält (Fig. 1).

6. Aufsatz für ein Ventil für Luftreifen od. dgl. Kammern, mit einem rohrartigen Ventilkörper (10), in dem ein axial bewegbares Schließelement (44) durch den die Ventilmündung (9) über eine Abdichtung umfangenden, lösbar am Ventilkörper angebrachten Aufsatz zur Luftzufuhr für den Luftreifen in Öffnungsstellung bringbar ist, wobei der Aufsatz mit einer Druckluftzuführung verbindbar ist, insbesondere für ein Ventil nach dem Oberbegriff des Anspruches 1 bzw. nach einem der Ansprüche 1 bis 5, dadurch gekennzeichnet, daß der Aufsatz (50, 50$_a$) mit einem das Schließelement (44) betätigenden Stift (48) versehen sowie mit einem Druckmeßgerät (52) verbunden ist und/oder ein Überdruckventil (82) enthält.

7. Aufsatz nach Anspruch 6, dadurch gekennzeichnet, daß die Abdichtung als Manschette (51) an den Aufsatz (50) angeformt oder als Dichtring (59) in einem Gehäusekörper (60, 60b) angeordnet und darin lösbar gehalten ist, wobei dann bevorzugt der Dichtring (59) einem den Stift (48) tragenden Anschlagstück (66) anliegt, der in einer Axialbohrung (70, 70b) oder einem dieser vorgeordneten Aufnahmeraum (68) festliegt (Fig. 3).

8. Aufsatz nach Anspruch 6 oder 7, dadurch gekennzeichnet, daß das Überdruckventil (82) in einem an die Axialbohrung (70, 70b) anschließenden erweiterten Raum (72b, 80, 99) untergebracht und mit einem Luftauslaß (64a, 90, 103) versehen ist, wobei der Aufnahmeraum entweder in der Ventillängsachse (M) als Erweiterung (70b) de Axialbohrung liegt (Fig. 7) oder seitlich an die einen Dichtkörper (74) bewegbar aufnehmenden Axialbohrung (70) anschließt.

9. Aufsatz nach Anspruch 8, dadurch gekennzeichnet, daß der Dichtkörper (74) in einer Schließstellung das freie Ende der Axialbohrung (70) verschließt und in einer Öffnungsstellung den Raum (80) für das Überdruckventil (82) von der Axialbohrung (70) trennt (Fig. 3).

10. Aufsatz nach einem der Ansprüche 6 bis 9, dadurch gekennzeichnet, daß der Dichtkörper (74) in Schließstellung einem konischen Sitz (76) der Axialbohrung (70) anliegt und in Öffnungsstellung zwischen den beiden Enden wenigstens eines Seitenkanals (71) der Axialbohrung (70) lagert, welcher einends an den Ventilkörper (10) anschließt, wobei gegebenenfalls in die Wand der Axialbohrung (70) als Seitenkanäle etwa radiale Längsnuten (71) eingeformt sind, die im Abstand zum konischen Sitz (76) enden.

11. Aufsatz nach wenigstens einem der Ansprüche 6 bis 10, dadurch gekennzeichnet, daß in die Axialbohrung (70) ein Anschlagbolzen (65) des Anschlagstückes (66) einragt und/oder das Anschlagstück (66) Luftdurchlaßöffnungen (58, 67) aufweist.

12. Aufsatz nach wenigstens einem der Ansprüche 6 bis 11, dadurch gekennzeichnet, daß das Überdruckventil (82) wenigstens eine Dichtscheibe (84) oder eine Dichtspitze (85) an einem Hubbolzen (86) aufweist, der gegen einen Energiespeicher (87) verschiebbar ist, wobei die Dichtscheibe (84) oder die Dichtspitze (85) einer Eingangsbohrung (70b, 79) des Aufnahmeraumes (72b, 80) des Überdruckventils (82) zugeordnet ist (Fig. 3, 4).

13. Aufsatz nach wenigstens einem der Ansprüche 6 bis 12, dadurch gekennzeichnet, daß der Aufnahmeraum (99) des Überdruckventils (82) ein Formstück (100) aufnimmt, welches ein pilzförmiges Schließelement (105) aus begrenzt elastischem Werkstoff enthält, dessen Kopfscheibe (106) Strömungsdurchbrüche (103) überdeckt und mit ihrem Randbereich davon abhebbar ist (Fig. 6).

14. Aufsatz nach wenigstens einem der Ansprüche 6 bis 13, gekennzeichnet durch eine die Mündung (79) des Überdruckventils (89) abdeckende und von dieser abhebbare kalottenartige Ausformung (95) einer Schließplatte (94), die randwärts eingespannt sowie außerhalb der Ausformung (95) mit Luftdurchlässen (97) versehen ist (Fig. 5).

## Claims

1. Valve for pneumatic tires or similar air containers, particularly for bicycle tubes (20), with a valve insert (10) set into valve housing (17) which is formed like a tube and equipped with a ring edge (11) that surrounds its valve outlet (9), attached to an axial chamber for an axially moveable closing element (44) which in its closed position sits close to the conical surface (40), which serves as the seat and is determined by the angle of inclination (w), of the chamber tapering down to the ring edge (11), whereby a ring rib (12) stands out radially from the valve insert (10) as stop for parts (14) of the valve housing (17), characterized in that the distance ($s_3$) from the edge close to the outlet (39) of the seat (40) to the ring edge (11) of the valve outlet (9) is approx. between 0.5 and 2.5 times the diameter of the outlet ($n_1$), preferably corresponding to the latter, and that the seat (40) is placed between ring edge (11) and ring rib (12), preferably in the middle of the axial distance (a) between them.

2. Valve according to Claim 1, characterized in that an inner ring wall (38) with a diameter ($n_2$) corresponding to approx. half of the outlet diameter ($n_1$) runs between the valve outlet (9) and the seat (40), whereby, if applicable, a surface (37) inclined at an angle (u) is placed between valve outlet (9) and ring wall (38), and/or that the anlge (u) of the inclined surface (37) is larger than the inclined angle (w) of the seat (40), which is about 20 to 28°, preferably 25°.

3. Valve according to Claim 1 or 2, characterized in that the closing element (44) is cylindrically formed and equipped, at least in its area away from the seat, with formations that stand out radially (46) and which roughly fit onto the side of the chamber (42).

4. Valve according to one of the Claims 1 to 3, characterized in that at least one ring groove (36) is moulded into the exterior surface (29) of the valve insert (10) to accept a corresponding formation (56) of a cap (50, 50a; 57).

5. Valve according to one of the Claims 1 to 4, characterized through a cap (50, 50a) which surrounds the valve outlet (9), is securely fastened, and detachable from the valve insert (10), containing a pin (48) which reaches to the seat (40), between which and the ring wall (38) there is a flow split, whereby the pin reaches up to about the inner border (41) of the seat (40) and holds the closing element (44) at a distance to it (fig. 1).

6. Cap for a valve for pneumatic tires or similar air containers with a tubelike valve insert (10) and an axially moveable closing element (44) through which the valve outlet (9) can be brought to a cap which extends over a seal and is detachable on the valve insert (10) for supplying air to the pneumatic tires in the open position, whereby the cap is connectable with an air-pressure supply, particularly for a valve according to the preamble of the Claim 1 or according to one of the Claims 1 to 5, characterized in that the cap (50, 50a) is equipped with a pin (48) which activates the closing element (44) as well as with pressure-gauge equipment (52) and/or contains an overpressure valve (82).

7. Cap according to Claim 6, characterized in that the seal is formed to the cap (50) as collar (51) or placed in housing (60, 60b) as sealing ring (59) and is detachably held within it, whereby it is then preferred that the sealing ring (59) sits close to a stop piece (66) which carries the pin (48) and is fixed within an axial bore (70, 70b) or a holding fixture (68) which is positioned on it (fig. 3).

8. Cap according to Claim 6 or 7, characterized in that the overpressure valve (82) is fit into an expanded area (72b, 80, 99) connected to the axial bore (70, 70b) and equipped with an air escape (64a, 90, 103), whereby the holding fixture lies either in the longitudinal valve axis (M) as an extension (70b) of the axial bore (fig. 7) or connects laterally to an axial bore (70) which is on the moveable receptive seal element (74).

9. Cap according to Claim 8, characterized in that the seal element (74) shuts the free end of the axial bore (70) in the closed position and separates the space (80) for the overpressure valve (82) from the axial bore (70) in the open position.

10. Cap according to one of the Claim 6 to 9, characterized in that the sealing element (74) in its closed position sits near a conical seat (76) of the axial bore (70) and in the open position rests between the two ends of at least one side channel (71) of the axial bore (70) which is connected with one end to the valve insert (10), whereby, if applicable, roughly radial longitudinal grooves (71) are moulded as side channels into the wall of the axial bore (70), ending spaced at the conical seat (76).

11. Cap according to at least one of the Claims 6 to 10, characterized in that a stop pin (65) of the stop piece (66) projects into the axial bore (70) and/or the stop piece (66) has venting outlets (58, 67).

12. Cap according to at least one of the Claims 6 to 11, characterized in that the overpressure valve (82) has at least one sealing disc (84) or a sealing tip (85) on a stroke pin (86), which can be closed to the energy accumulator (87), whereby the sealing disc (84) or the sealing tip (85) of an input bore (70b, 79) of the holding fixture (72b, 80) is placed on the overpressure valve (82) (fig. 3, 4).

13. Cap according to at least one of the Claims 6 to 12, characterized by labelling in which the holding fixture (99) of the overpressure valve (82) admits a fitting (100) which contains a mushroom-shaped closing element (105) of limited elastic material, the head disc (106) of which covers breaks in the flow (103) and can be lifted away with its border area (fig. 6).

14. Cap according to at least one of the claims 6 to 13, characterized in that it is equipped with a spherical formation (95) of a closing plate (94) which covers the outlet (79) of the overpressure valve (89), can be lifted away from it, and is mounted towards the edge as well as outside of the formation (95) with air vents (97) (fig. 5).

**Revendications**

1. Valve pour pneus ou des chambres à air semblables, notamment pour des boyaux pour bicyclettes (20) avec un corps de valve (10) introduit dans une boîte à valve (17) lequel a la forme d'un tube et une arête annulaire (11) qui entoure sa bouche de valve (9), à l'arête se raccordant une chambre axiale destinée à un élément de fermeture (44) mobil dans le sens axial lequel dans sa position de fermeture colle à une surface (40) de la chambre s'effilant vers l'arête annulaire (11), cette surface ayant la forme d'une aire latérale de cône, déterminant un angle d'inclinaison (w) et servant de logement, du corps de valve (10) saillant radialement une nervure annulaire (12) comme arrêt pour des pièces (14) de la boîte à valve (17), caractérisée en ce que la distance (53) de l'arête (39) proche de la bouche de la surface de logement (40) à l'arête annulaire (11) de la bouche de valve (9) se monte environ du 0,5ième au 2,5ième du diamètre ($n_1$) de la bouche de préférence correspondant au dernier et que la surface de logement (40) se trouve entre l'arête annulaire (11) et la nervure annulaire (12), de préférence au milieu de leur distance axiale (a).

2. Valve selon la revendication 1 caractérisée en ce qu'il y a entre la bouche de valve (9) et la surface de logement (40) une paroi annulaire intérieure (38) dont le diamètre ($n_2$) correspond à peu près à la moitié du diamètre de la bouche ($n_1$), étant placé, le cas échéant, entre la bouche devalve (9) et la paroi annulaire (38) une surface (37) inclinée vers celle-ci dans un angle d'inclinaison (w) de la surface de logement (40) qui est environ de 20 à 28°, de préférence de 25°.

3. Valve selon la revendication 1 ou 2 caractérisée en ce que l'élément de fermeture (44) a une forme cylindrique et possède au moins dans sa partie loin du logement des parties en saillie radiale (46) adjacent à peu près à la paroi de la chambre (42).

4. Valve selon une des revendications 1 à 3 caractérisée en ce que la surface extérieure (29) proche de la bouche du corps de valve (10) possède au moins une rainure annulaire (36) pour l'accueil d'une partie correspondante (56) d'un chapeau (50, 50a; 57).

5. Valve selon une des revendications 1 à 4, caractérisée par un chapeau (50, 50a) qui entoure la bouche de valve (9) et qui est fixé de manière détachable au corps de valve (10), ce chapeau contenant une broche (48) qui va jusqu'à la surface de logement (40) et entre lequel et la paroi annulaire (38) se trouve une fente d'écoulement, la broche allant environ jusqu'à l'arête intérieure (41) de la surface de logement (40) et distançant l'élément de fermeture (44) de celle-ci (fig. 1).

6. Chapeau pour une valve pour des pneus ou des chambres semblables avec un corps de valve (10) ayant la forme d'un tube dans lequel un élément de fermeture (44) mobile dans le sens axial peut être mis en position d'ouverture pour l'alimentation d'air pour le pneu moyennant le chapeau entourant la bouche de valve (9) à travers d'un étanchement et fixé de manière détachable au corps de la valve, le chapeau étant à raccorder à une alimentation d'air comprimé, notamment pour une valve selon le terme générique de la revendication 1 ou bien selon le terme générique de la revendication 1 ou bien selon une des revendications 1 à 5, caractérisée en ce que le chapeau (50, 50a) est pourvu d'une broche (48) actionnant l'élément de fermeture (44) et est lié à un manomètre (52) et/ou contient une soupape de surpression (82).

7. Chapeau selon la revendication 6 caractérisé en ce que l'étanchement est placé au chapeau (50) comme manchette (51) ou placé comme bague d'étanchéité (59) dans un corps de boîtier (60, 60b) dans lequel il est fixé de manière détachable, dans ce cas-là la bague d'étanchéité (59) étant de préférence adjacente à une pièce d'arrêt (66) portant la broche (48) qui est fixée dans un alésage axial (70, 70b) ou une chambre d'accueil (68) qui se trouve devant celui-ci (fig. 3).

8. Chapeau selon la revendication 6 ou 7 caractérisé en ce que la soupape de surpression (82) est placée dans une chambre élargie (72b, 80, 99) se raccordant à l'alésage axial (70, 70b) et qu'elle est pourvue d'une sortie d'air (64a, 90, 103), la chambre d'accueil se trouvant ou dans l'axe longitudinale de valve (M) comme élargissement (70b) de l'alésage axial (fig. 7) ou se raccordant latéralment à l'alésage axial (70) accueillant de manière mobile un corps d'étanchéité (74).

9. Chapeau selon la revendication 8 caractérisé en ce que le corps d'étanchéité (74) dans une position de fermeture ferme l'extrémité libre de l'alésage axial (70) et dans une position d'ouverture sépare la chambre (80) destinée à la soupape de surpression (82) de l'alésage axial (70) (fig. 3).

10. Chapeau selon une des revendications 6 à 9 caractérisé en ce que le corps d'étanchéité (74) dans la position de fermeture colle à un logement conique de l'alésage axial (70) et dans la position d'ouverture se trouve entre les deux éxtrémités d'au moins un canal latéral (71) de l'alésage axial (70) lequel se raccorde à une éxtrémité au corps de valve (10), dans la paroi de l'alésage axial (70) étant fait, le cas échéant, des rainures longitudinales radiales (71) en tant que canaux latéraux qui se terminent à distance au logement conique (76).

11. Chapeau selon au moins une des revendications 6 à 10 caractérisé en ce que dans l'alésage axial (70) entre un boulon de butée (65) de la pièce d'arrêt (66) et/ou que la pièce d'arrêt (66) possède des ouvertures de passage d'air (58, 67).

12. Chapeau selon au moins une des revendications 6 à 11 caractérisé en ce que la soupape de surpression (82) possède au moins une rondelle d'étanchéité (84) ou une pointe d'étanchéité (85) à un boulon de levage (86) qui est déplaçable contre un réservoir d'énérgie (87), la rondelle d'étanchéité (84) ou la pointe d'étanchéité (85) étant prévu pour un alésage d'entrée (70b, 79) de la chambre d'accueil (72b, 80) de la soupape de surpression (82) (fig. 3, 4).

13. Chapeau selon au moins une des revendications 6 à 12 caractérisé en ce que la chambre de logement (99) de la soupape de surpression (82) cueillit une pièce façonnée (100) qui contient un élément de fermeture fongueux (105) d'une matière d'une élasticité limitée dont le disque en bout (10) couvre des passages d'écoulement (103) et en est détachable avec sa zone de bord (fig. 6).

14. Chapeau selon au moins une des revendications 6 à 13 caractérisé par une pièce en forme de calotte (95) couvrant la bouche (79) de la soupape de surpression (89) et détachable de celle-ci qui fait partie d'une plaque de fermeture (94) qui est encastrée à la côté du bord et qui est pourvue de passages d'air (97) à l'extérieur de la pièce (95) (fig. 5).

Fig.1

Fig.2

Fig.5

Fig.4

Fig.6

Fig.3

Fig.7

Fig.8